# EUROPÄISCHE PATENTSCHRIFT

(11) **EP 1 074 338 B1**
(45) Veröffentlichungstag und Bekanntmachung des Hinweises auf die Patenterteilung: **26.03.2003**
(21) Anmeldenummer: 00115572.0
(22) Anmeldetag: 19.07.2000
(51) Int. Cl.: B23Q 37/00, B25J 9/16, B23P 23/02

(54) **Werkzeugmaschinenführungssystem bzw. Mehrachsenroboter für eine Mehrzahl von Werkzeugen**
Machine tool guiding system or multi-axis robot for a plurality of tools
Système de guidage pour machine-outil ou robot multiaxial pour une pluralité d'outils

(30) Priorität: 19.07.1999 DE 19933796
(43) Veröffentlichungstag der Anmeldung: 07.02.2001
(73) Patentinhaber: Huber & Grimme Bearbeitungssysteme GmbH, 86879 Wiedergeltingen (DE)
(72) Erfinder: Grimme,Wolfgang, 86842 Türkheim (DE)
(74) Vertreter: Winter, Brandl, Fürniss, Hübner, Röss, Kaiser, Polte Partnerschaft

(56) Entgegenhaltungen:
- EP-A- 0 540 496
- EP-A- 0 820 841
- DE-A- 4 400 235
- DE-C- 3 051 184
- PATENT ABSTRACTS OF JAPAN vol. 015, no. 406 (P-1263), 16. Oktober 1991 (1991-10-16) & JP 03 163605 A (OKUMA MACH WORKS LTD), 15. Juli 1991 (1991-07-15)
- PATENT ABSTRACTS OF JAPAN vol. 1999, no. 12, 29. Oktober 1999 (1999-10-29) & JP 11 175128 A (AMADA CO LTD), 2. Juli 1999 (1999-07-02)

## Beschreibung

Die Erfindung betrifft ein Werkzeugmaschinenführungssystem bzw. einen Mehrachsenroboter für eine Mehrzahl von Werkzeugen, um mit ein und demselben System unterschiedliche Bearbeitungsvorgänge durchführen zu können.

Aus der DE 30 04 499 A1 ist eine Werkzeugmaschine bekannt, bei der sich unterschiedliche Werkzeuge mit einer Werkzeugaufnahme verbinden lassen. Aus der DE 196 30 096 A1 ist eine Ultraschallschneidevorrichtung bekannt, bei der die Bahnsteuerung entlang von sechs Achsen erfolgt.

Aus der EP 0 820 841 A1 ist eine Vorrichtung gemäss dem Oberbegriff des Anspruchs 1 zum räumlichen Schneiden von dünnwandigen Formtüten bekannt, bei der eine an einer Sonotrode befestigbare Klinge, die um ihre Längsachse gesteuert drehbar ist von einem Werkzeugmaschinenführungssystem zur Realisierung eines räumlichen Schnittes geführt wird.

Die Firma Maka in Ulm vertreibt Werkzeugmaschinenführungssystem in Portalanordnung, bei der zwei unterschiedliche Werkzeugträgertürme an einem Querbalken eines Portals entlang einer horizontalen Y-Achse zwischen zwei Endpunkten hin- und herbewegbar sind. Der darunterliegende Arbeitstisch ist in einer Richtung senkrecht zu der Y-Achse, d.h. der X-Achse bewegbar und das an dem jeweiligen Werkzeugträgerturm befindliche Werkzeugsystem läßt sich zusätzlich in einer Richtung senkrecht zu der X- und Y-Achse, einer Z-Richtung bewegen. Zusätzlich weisen beide Werkzeugträgertürme zwei weitere aufeinander senkrecht stehende Drehachsen, A- und B-Achse, auf. Einer der beiden Werkzeugträgertürme ist zusätzlich um eine sechste Achse, eine sogenannte C-Achse drehbar. Dadurch, daß zwei vollständige Werkzeugträgertürme vorgesehen werden müssen, ist ein solches Werkzeugmaschinenführungssystem sehr teuer.

Es ist daher Aufgabe der vorliegenden Erfindung einen Mehrachsenroboter bzw. ein Werkzeugmaschinenführungssystem bereitzustellen, das bei gleicher Funktionalität kostengünstiger ist.

Die Lösung dieser Aufgabe erfolgt durch die Merkmale des Anspruchs 1 bzw. 8.

Der Grundgedanke der Erfindung besteht darin, die doppelte Ausführung von teuren Komponenten möglichst zu vermeiden. Gemäß einer ersten Ausgestaltung der Erfindung (Anspruch 1) erfolgt dies dadurch, daß lediglich das Teil des Mehrachsenroboters bzw. des Werkzeugmaschinenführungssystems in dem die zusätzliche Achse integriert ist als Wechselsystem ausgeführt wird bzw. mit dem jeweiligen Werkzeug gewechselt wird. Folglich wird ein Mehrachsenroboter bzw. ein Werkzeugmaschinenführungssystem bereitgestellt, das wenigstens zwei unterschiedliche Arten von Werkzeugkomponenten aufweist, die wahlweise verwendet werden. Die erste Art von Werkzeugkomponente umfaßt hierbei das jweilige Werkzeug, ein Werkzeughalteteil, in dem das Werkzeug drehbar gelagert ist, und einen Drehantrieb, der die Drehung um die fragliche Achse (C-Achse) ermöglicht. Die zweite Art von Werkzeugkomponente läßt sich an gleicher Stelle wie die erste Werkzeugkomponente an das Maschinenhauptteil anbringen, die gegebenfalls vorhande zusätzliche Achse wird jedoch nicht für die Bahnkurvensteuerung verwendet. Alle anderen Komponenten des System bleiben unverändert. Da die beiden Werkzeugkomponenten wahlweise verwendet werden, muß die Steuerung des Gesamtsystems auch für die Steuerung der zusätzlichen C-Achse ausgelegt sein. Wird nun die zweite Art von Werkzeugkomponente verwendet, die keine C-Achse aufweist, würde die Steuerung an sich einen Fehler anzeigen, da die Steuerung keine Position der C-Achse ermitteln kann. Um diese Fehlermeldung zu unterdrücken, umfaßt das erfindungsgemäße System eine Einrichtung zum Ausblenden der Steuerung dieser zusätzlichen C-Achse. Wenn die Software ermittelt, daß keine C-Achse vorhanden ist, die in der Bahnkurversteuerung mitberücksichtigt werden muß, erfolgt die weitere Steuerung ohne Signale für die C-Achse, d.h. die Steuerung der C-Achse wird ausgeblendet. Besonders vorteilhaft ist es hierbei, daß dieses Ausblenden der Steuerung der C-Achse softwaremäßig realisiert werden kann, so daß wenige zusätzlichen elektrische Hardwarekomponenten benötigt werden.

Gemäß einer weiteren Ausgestaltung der Erfindung (Anspruch 8) wird statt zwei unterschiedlichen Arten von Werkzeugkomponenten eine Werkzeugwechseleinrichtung verwendet, in die das jeweilige Werkzeug eingesetzt wird. Diese Werkzeugwechseleinrichtung umfaßt die fragliche C-Achse jedoch wird sie in gleicher Weise wie bei der ersten Ausgestaltung der Erfindung ausgeblendet bzw. die Steuerung der C-Achse wird ausgeblendet und diese Achse wird blockiert, wenn ein Werkzeug in die Werkzeugwechseleinrichtung eingesetzt wird, das keine zusätzliche C-Achse benötigt.

Die Unteransprüche beziehen sich auf weitere vorteilhafte Ausgestaltungen der Erfindung.

Weitere Einzelheiten, Merkmale und Vorteile der Erfindung ergeben sich aus der nachfolgenden Beschreibung von bevorzugten Ausführungsformen anhand der Zeichnung.

Es zeigt:
Fig. 1 eine Seitenansicht einer ersten Ausführungsform der Erfindung in Form einer Portaleinheit,
Fig. 2 eine Ansicht von vorne der Ausführungsform nach Fig. 1
Fig. 3a, b, c eine Ansicht von vorne, von oben und von der Seite der ersten Art von Werkzeugkomponente mit einer zusätzlichen Drehachse (C-Achse);
Fig. 4a, b, c eine Ansicht von vorne, von oben und von der Seite der zweiten Art von Werkzeugkomponente ohne die zusätzliche C-Achse;
Fig. 5a, b schematisch eine zweite Ausführungsform der Erfindung in Form eines Werkzeugmaschinenführungssystems in C-Anordnung; und
Fig. 6 schematisch eine dritte Ausführungsform der Erfindung in Form eines Werkzeugmaschinenführungssystems bzw. Mehrachsenroboters mit TTT-Kinematik; und
Fig. 7 schematisch eine vierte Ausführungsform der Erfindung in Form eines Mehrachsen- oder Knickarmroboters.

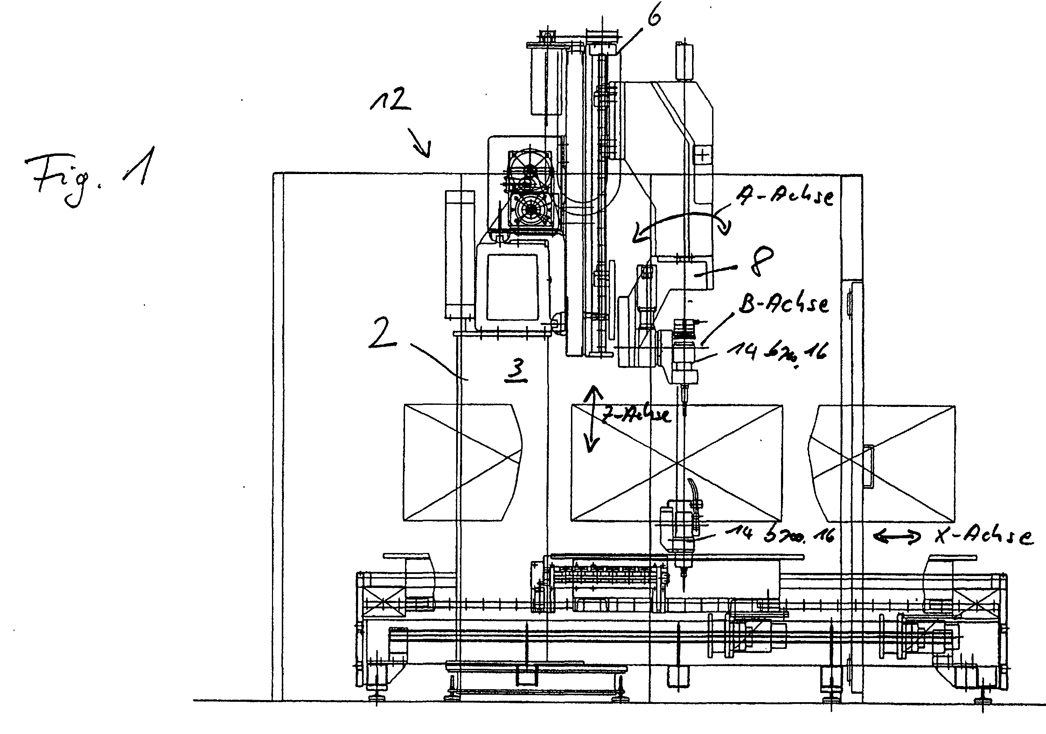

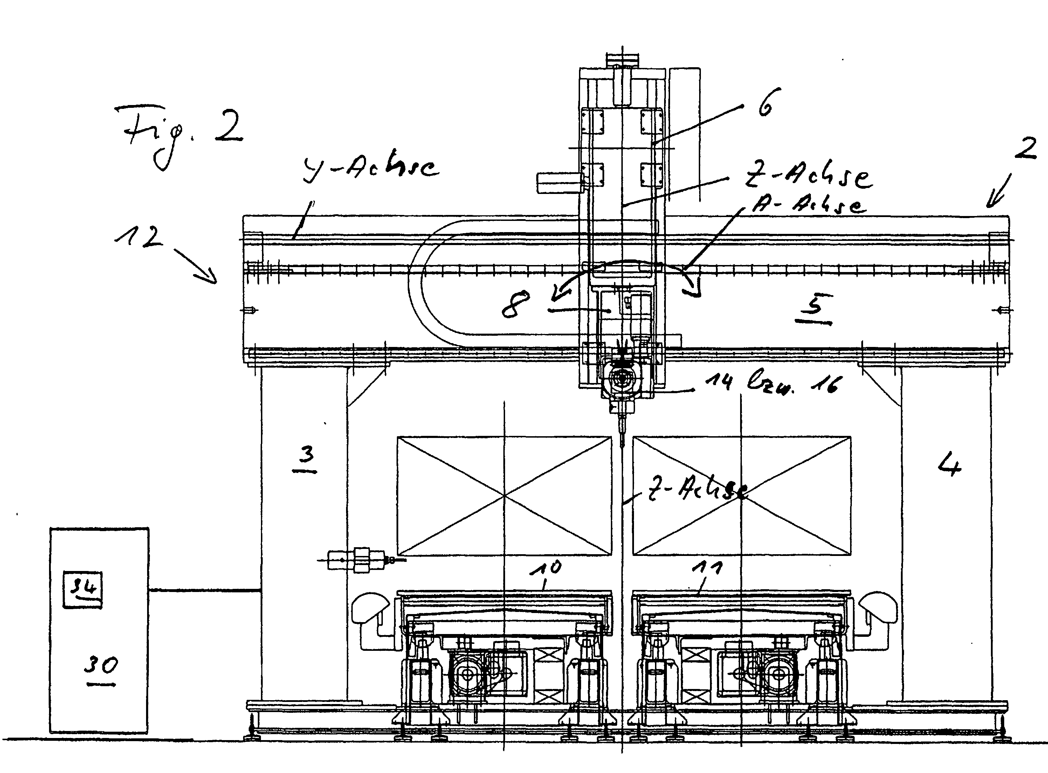

Fig. 1 bis 4 zeigen eine erste Ausführungsform der Erfindung, ein Werkzeugmaschinenführungssystem in Form einer Portaleinheit in einer Seitenansicht und einer Ansicht von vorne. Das Werkzeugmaschinenführungssystem gemäß der ersten Ausführungsform umfaßt ein Portal 2 mit zwei senkrechten Pfosten 3 und 4, die durch einen Querbalken 5 miteinander verbunden sind. An dem Querbalken 5 ist ein Werkzeugträgerturm 6 zwischen den senkrechten Pfosten 3 und 4 hin- und herbeweglich angeordnet. Die Bewegung des Werkzeugträgerturms 6 an dem Querbalken 5 definiert die Y-Achse. An dem Werkzeugträgerturm 6 ist ein Werkzeugträgerarm 8 drehbar gelagert, wobei diese Drehachse (A-Achse) vertikal verläuft. Der Werkzeugträgerarm 8 läßt sich an dem Werkzeugträgerturm 6 ebenfalls in vertikaler Richtung linear verschieben (Z-Achse). Unter dem Querbalken 5 des Portals 2 sind ein erster und ein zweiter Arbeitstisch 10 und 11 angeordnet, die sich in einer Richtung senkrecht zur Y-Achse und senkrecht zur Z-Achse linear verschieben lassen (X-Achse). Die beiden Arbeitstische 10 und 11, das Portal 2, der Werkzeugträgerturm 6 und der Werkzeugträgerarm 8 bilden zusammen ein Maschinenhauptteil 12.

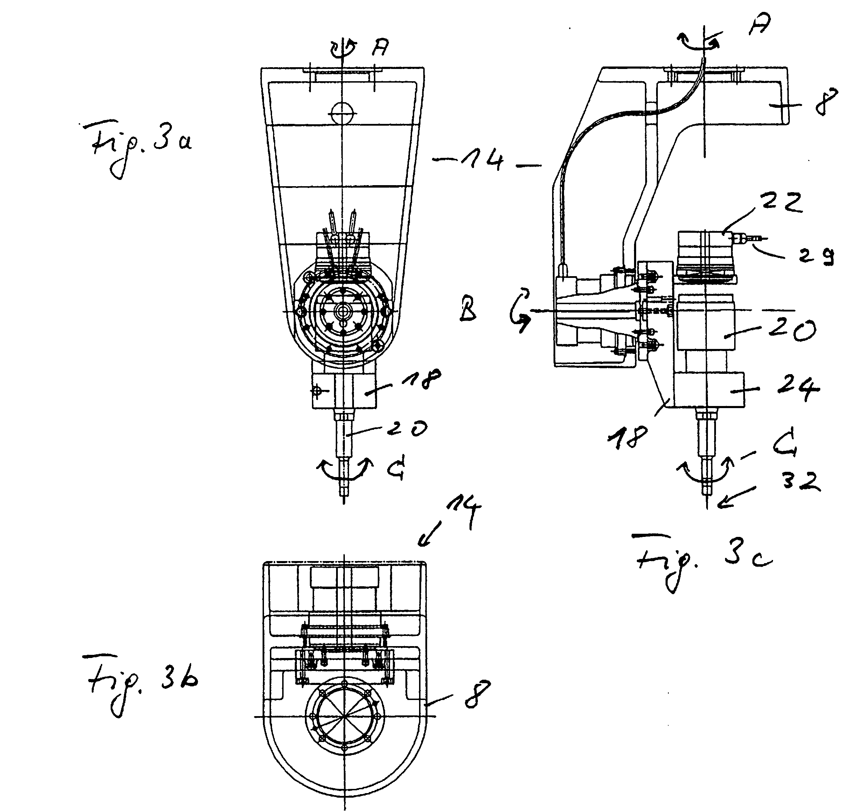

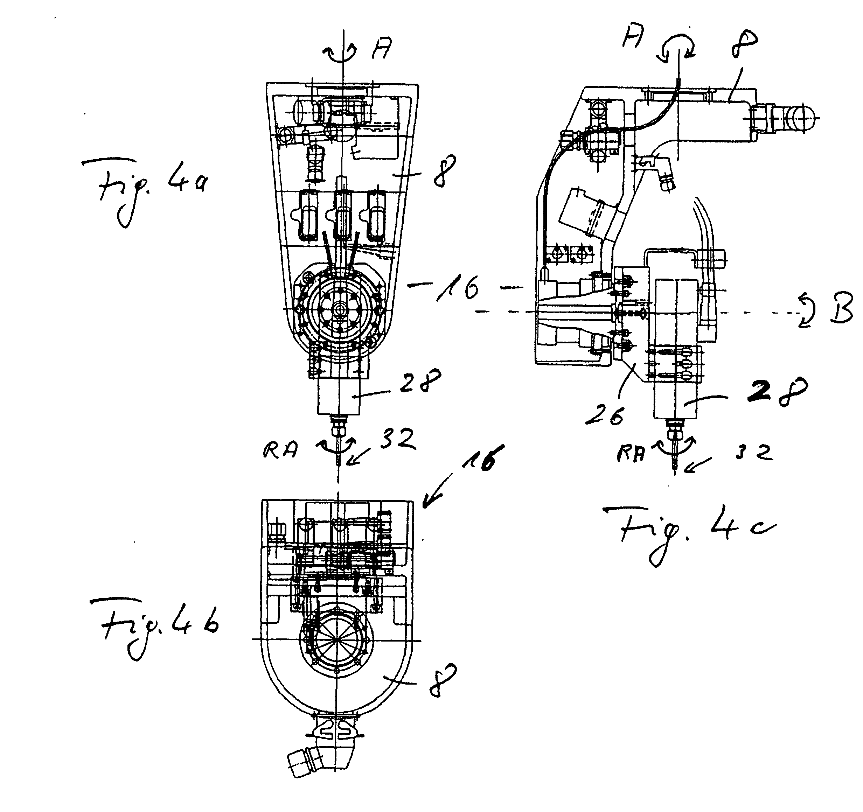

An dem Maschinenhauptteil 12 bzw. genauer an dem Werkzeugträgerarm 8 lassen sich drehbar wahlweise eine erste oder eine zweite Werkzeugträgerkomponente 14 und 16 befestigen (siehe Fig. 3 und 4). Die Drehung der jeweiligen Werkzeugkomponente 14 oder 16 an dem Werkzeugträgerarm 8 definiert die B-Achse. A- und B-Achse stehen senkrecht aufeinander. Sowohl die Ultraschallkomponente 14 als auch die Fräserkomponente 16 weisen dem zu bearbeitenden Werkstück zugewandte Enden oder Spitzen 32 auf. Diese Spitzen 32 durchlaufen die Bahnkurve im Raum entlang der das jeweilige Werkzeug geführt wird.

Die erste Werkzeugkomponente 14 ist als Ultraschallkomponente ausgebildet und umfaßt ein Werkzeughalteteil 18, eine Ultraschalleinheit 20 und einen Drehantrieb 22. Das erste Werkzeughalteteil 18 umfaßt ein Drehlager 24 in dem die Ultraschalleinheit 20 drehbar gelagert ist. Der Drehantrieb 22 und das Drehlager 24 ermöglichen zusammen die Drehung der Ultraschalleinheit 20 umd die C-Achse. Wenn beispielsweise die Ultraschalleinheit eine nicht näher dargestellte Klinge aufweist, kann mittels Verdrehung um die C-Achse die Stellung der Klinge zum zu schneidenden Objekt variert werden. Damit kann die Bahnsteuerung anhand von sechs Achsen, den drei Translationsachen X, Y und Z, sowie den drei Drehachsen A, B und C durchgeführt werden.

Fig. 4 zeigt die zweite Werkzeugkomponente 16 in Form einer Fräserkomponente. Die Fräserkomponente 16 umfaßt ein zweites Werkzeughalteteil 26 und eine daran befestigte Fräsereinheit 28. Die Fräserkomponente 16 weist keine in die Bahnsteuerung einbezogen Drehachse C auf, sondern lediglich ein Rotationsachse RA, um die die Fräsereinheit 28 rotiert. Die Rotationsachse RA und die Drehachse C sind in ihrer räumlichen Anordnung identisch. Allerdings wird nur die C-Achse in die Bahnsteuerung mit einbezogen, während die Achse RA lediglich die Rotationsachse des rotierenden Fräsers 28 darstellt und nicht in die Bahnsteuerung miteinbezogen ist.

Die elektrische Verbindung zwischen der Ultraschallkomponente 14 und dem Werkzeugträgerarm 8 erfolgt mittels einer Steckereinrichtung 29. Über diese Steckereinrichtung 29 werden auch die Drehratensignale der C-Achse an die Steuerung 30 geleitet. Bei Verwendung eines Hohlwellenservomotors oder allgemein eines Wellenservomotors als Drehantrieb 22 spricht man von Encodersignalen.

Die Steuerung des Gesamtsystems erfolgt mittels einer Steuereinrichtung 30. Die Ultraschallkomponente 14 und die Fräserkomponente 16 sind so ausgebildet, daß die Spitzen 32 der Fräsereinheit 28 bzw. Ultraschalleinheit 20 in einer Grundstellung sich in identischer Raumposition befinden. Die Steuereinrichtung 30 umfaßt eine Einrichtung 34 zum Ausblenden der Steuerung der C-Achse für den Fall, daß die zweite Werkzeugkomponente, d.h. die Fräserkomponente 16 an dem Maschinenhauptteil 12 montiert ist. Die Einrichtung 34 ist vorzugsweise als Software mit wenigen zusätzlichen Hardwarekomponenten realisiert.

Die Steuereinrichtung 30 mit zugehöriger Software ist zur Steuerung der sechs Achsen, X-, Y-, Z-, A-, B- und C-Achse, ausgelegt. Beim Starten des Systems wird ein sogenannter Referenzlauf durchgeführt, bei dem die Nullpositionen der einzelnen Achsen als Bezugsgröße bzw. Referenz angefahren werden. Während dem Ablauf der Steuerung wird die Position der jeweiligen Achse dann in Bezug zu der jeweiligen Referenzgröße angegeben. Sofern die Ultraschallkomponente 14 montiert ist, erfolgt somit die Steuerung in bekannter Weise. Falls die Fräserkomponente 16 montiert ist, die keine C-Achse aufweist bzw. bei der anstelle der C-Achse lediglich eine nicht in die Bahnsteuerung einbezogene Rotationsachse RA vorliegt, würde eine herkömmliche Steuerung eine Fehlermeldung ausgeben, da sie die Position der C-Achse nicht ermitteln kann. Gemäß der vorliegenden Erfindung wird dagegen das Fehlen der C-Achse nicht als Fehler gewertet, sondern die Bahnkurvensteuerung erfolgt mit entsprechenden Positionskomandos für die fünf verbleibenden Achsen X, Y, Z, A und B.

Die Hardwareendschalter der A-, B- und C-Achse werden entsprechend der Anbauauswahl von Ultraschallkomponenten 14 oder Fräserkomponente 16 zu- oder abgeschaltet. Die Softwareendlagen der A- und B-Achse werden vorzugsweise über SPS-Module entsprechend der jeweiligen Werkzeugkomponente unterschiedlich gehandhabt. Beispielsweise umfaßt die A- und B-Achse im Falle des Anbaus der Fräserkomponente 16 einen Drehwinkel von ±1080°, d.h. drei vollen Umdrehungen in Plus- und Minusrichtung, hierbei sind die Hardwareendschalter deaktiviert. Für den Fall des Anbaus der Ultraschallkomponente 14 genügt für die A-Achse eine Drehung um ±180° und für die B-Achse eine Drehung um ±110°, hierbei sind die Hardwareendschalter aktiviert. Durch die geringere Drehung wird sichergestellt, daß Kabelzuführungen zu der Ultraschallkomponente 14 nicht abgerissen werden.

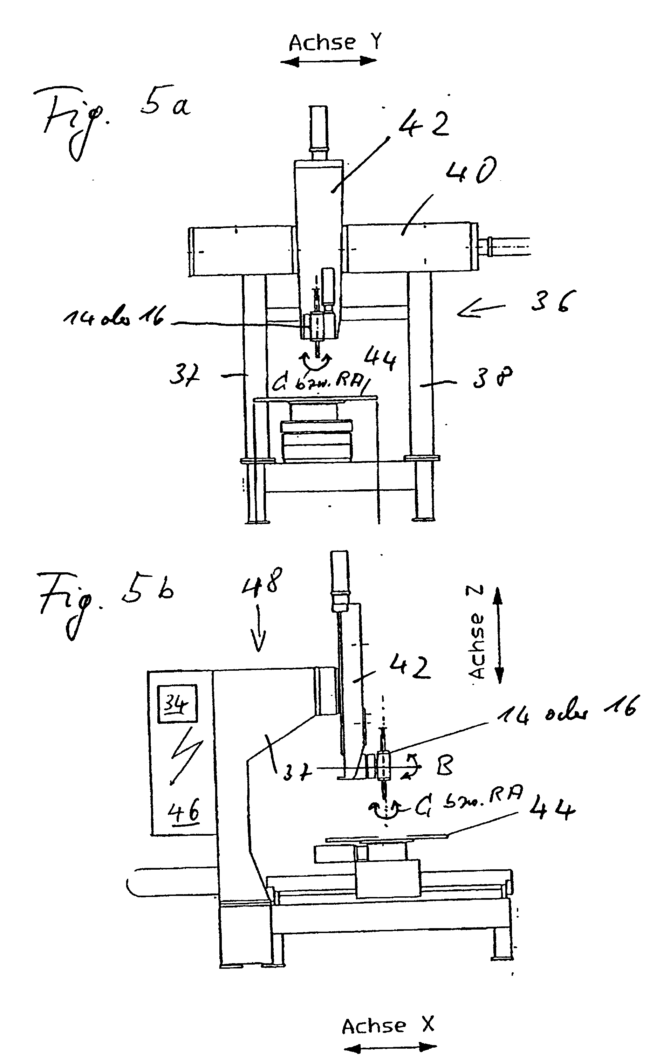

Fig. 5a und 5b zeigen eine zweite Ausführungsform der Erfindung in Seiten- und Frontansicht. Diese zweite Ausführungsform ist eine sogenannte C-Anordnung und umfaßt eine Trägerstruktur 36 mit zwei senkrechten Pfosten 37 und 38, die durch einen Querbalken 40 miteinander verbunden sind. An dem Querbalken 40 ist ein Werkzeugträgerturm 42 zwischen den senkrechten Pfosten 37 und 38 hin- und herbeweglich angeordnet. Die Bewegung des Werkzeugträgerturms 42 an dem Querbalken 40 definiert die Y-Achse. Der Werkzeugträgertrum 42 läßt sich an dem Querbalken 40 in vertikaler Richtung linear verschieben (Z-Achse). Vor den beiden senkrechten Pfosten 37 und 38 und unter dem Querbalken 40 ist ein Arbeitstisch 44 angeordnet, der sich in einer Richtung senkrecht zur Y-Achse und senkrecht zur Z-Achse linear verschieben lassen (X-Achse). Der Arbeitstisch 44, die Trägerstruktur 36, der Werkzeugträgerturm 42 und eine Steuereinrichtung 46 bilden zusammen ein Maschinenhauptteil 48. An dem Werkzeugträgerturm 42 lassen sich dann die eine erste oder zweite Werkzeugkomponente 14 oder 16 drehbar montieren.

In ihrer Funktionsweise entspricht die zweite Ausführungsform der ersten Ausführungsform. Hinsichtlich ihres Aufbaus unterscheidet sich die zweite Ausführungsform von der ersten Ausführungsform im wensentlichen dadurch, daß sie einen einzelnen Arbeitstisch 44 aufweist und der Arbeitstisch 44 nicht zwischen den beiden Pfosten 37 und 38, sondern vor diesen angeordnet ist.

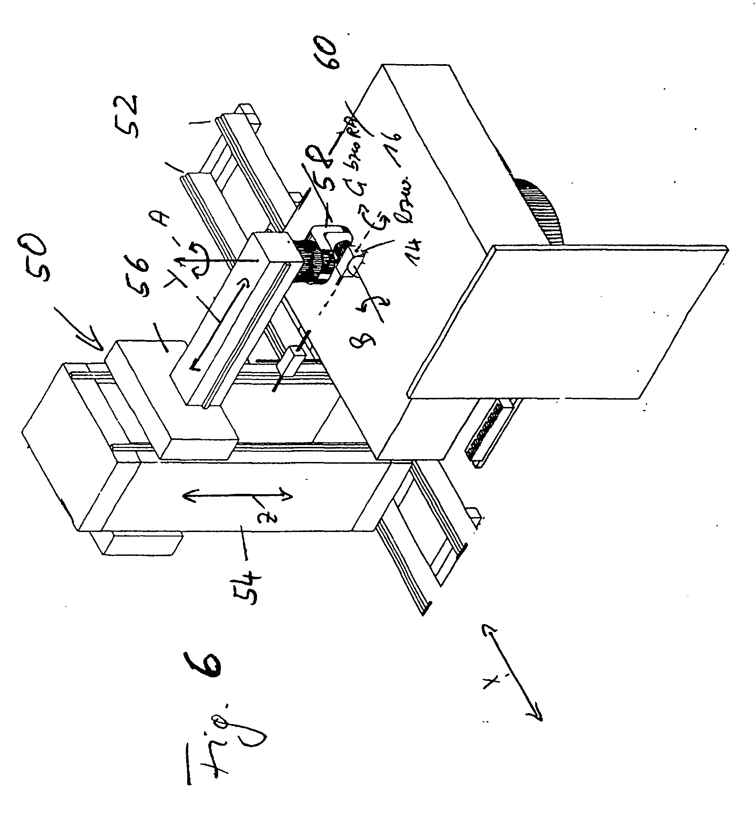

Fig. 6 zeigt schematisch eine dritte Ausführungsform der Erfindung in Form eines Werkzeugführungssystems oder Mehrachsenroboters in mit sogenannter TTT-Kinematik. Diese Ausführungsform umfaßt ebenfalls ein Maschinenhauptteil 50, das mittels Führungen 52 hin- und herbewegbar ist (X-Achse). Das Maschinenhauptteil 50 umfaßt einem senkrecht stehenden Werkzeugturm 54, an dem ein Querträger 56 befestigt vertikal (Z-Achse) verschiebbar angeordnet ist. An dem Querträger 56 ist linear verschiebbar (Y-Achse) ein Werkzeugträgerarm 58 angeordnet, der sich zusätzlich um eine vertikale Drehachse (A-Achse) verdrehen läßt. An dem Werkzeugträgerarm 58 wird wahlweise eine erste Werkzeugkomponente 14, z.B. eine Ultraschallkomponente, oder eine zweite Werkzeugkomponente 16, z.B. eine Fräserkomponente, montiert. Das zu bearbeitende Produkt ist auf einem Arbeitstisch 60 angeordnet, der ebenfalls drehbar ausgeführt sein kann. Die übrige Funktionsweise entspricht der ersten Ausführungsform, so daß auf eine detaillierte Beschreibung verzichtet werden kann.

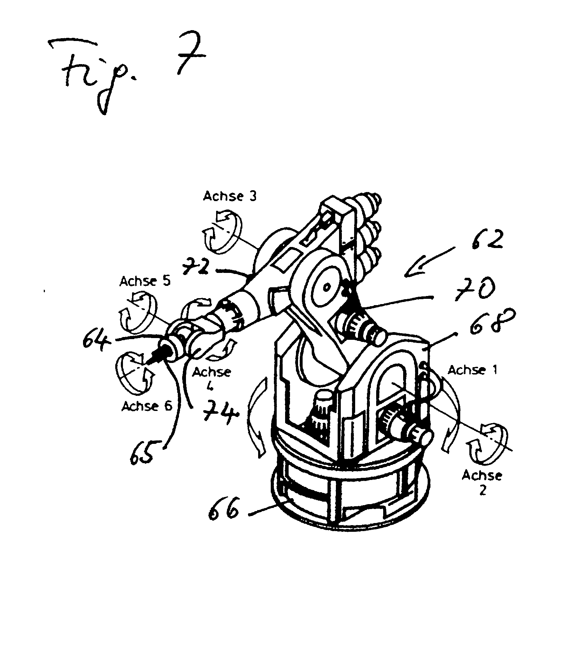

Fig. 7 zeigt schematisch eine vierte Ausführungsform der Erfindung in Form eines einarmigen Mehrachsenroboter mit Knickarm. Die vierte Ausführungsform umfaßt ebenfalls ein Maschinenhauptteil 62 und eine daran montierte Werkzeugwechseleinrichtung 64 in das sich unterschiedliche Werkzeuge 65 einsetzen lassen. Das Maschinenhauptteil 62 umfaßt einen Sockel 66 auf dem ein Roboterfuß 68 drehbar (Achse 1) gelagert ist. An dem Roboterfuß 68 ist ein erster Roboterarm 70 um eine vertikale Achse (Achse 2) schwenkbar gelagert. An dem ersten Roboterarm 70 ist ein zweiter Roboterarm 72 ebenfalls um eine vertikale Achse (Achse 3) schwenkbar gelagert. An dem zweiten Roboterarm 72 ist eine Werkzeughalterung 74 drehbar (Achse 4) gelagert. An der Werkzeughalterung 74 ist dann die Werkzeugwechseleinrichtung 64 schwenkbar (Achse 5) gelagert. Die Achse 6 wird je nach eingesetztem Werkzeug 65 durch die Werkzeugwechseleinrichtung 64 zur Verfügung gestellt oder nicht.

Das Ausblenden der sechsten Achse erfolgt in analoger Weise, wie bei den vorhergehend beschriebenen Ausführungsformen. Zusätzlich wird bei der vierten Ausführungsform die sechste Achse auch mechanisch blockiert, falls sie nicht benötigt wird.

Die Werkzeugwechseleinrichtung kann auch bei Portalmaschienen und Maschinen in C-Anordnung verwendet werden. Umgekehrt kann auch das Konzept mit unterschiedlichen Werkzeugkomponenten bei Mehrachsenrobotern mit Knickarm angewandt werden.

### Bezugszeichenliste:

Fig. 1 bis 4:
   - 2: Portal
   - 3, 4: senkrechte Pfosten von 2
   - 5: Querbalken von 2
   - 6: Werkzeugträgerturm
   - 8: Werkzeugträgerarm
   - 10: erster Arbeitstisch
   - 11: zweiter Arbeitstisch
   - 12: Maschinenhauptteil
   - 14: erste Werkzeugkomponente, Ultraschall
   - 16: zweite Werkzeugkomponente, Fräser
   - 18: erstes Werkzeughalteteil
   - 20: Ultraschalleinheit
   - 22: Drehantrieb von 20
   - 24: Drehlager
   - 26: zweites Werkzeughalteteil
   - 28: Fräsereinheit
   - 29: Steckerverbindung
   - 30: Steuereinrichtung
   - 32: Spitze von 20 bzw. 28
   - 34: Einrichtung zum Ausblenden der Steuerung der C-Achse
Fig. 5a, b:
   - 36: Trägerstruktur
   - 37, 38: senkrechte Pfosten von 36
   - 40: Querbalken von 36
   - 42: Werkzeugträgerturm
   - 44: Arbeitstisch
   - 46: Steureinrichtung
   - 48: Maschinenhauptteil
Fig. 6:
   - 50: Maschinenhaupteil
   - 52: Führungen
   - 54: Werkzeugturm
   - 56: Querträger
   - 58: Werkzeugträgerarm
   - 60: Arbeitstisch
Fig. 7:
   - 62: Maschinenhaupteil
   - 64: Werkzeugwechseleinrichtung
   - 65: Werkzeug
   - 66: Sockel
   - 68: Roboterfuß
   - 70: erster Roboterarm
   - 72: zweiter Roboterarm
   - 74: Werkzeughalterung

## Patentansprüche

1. Werkzeugmaschinenführungssystem oder Mehrachsenroboter für einer Mehrzahl von Werkzeugen, mit
- wenigstens einer ersten Werkzeugkomponente (14), die ein erstes Werkzeughalteteil (18), ein erstes Werkzeug (20), das an dem Werkzeughalteteil (18) drehbar (C-Achse) gelagert ist, und einen Drehantrieb (22) umfasst;
- einem Maschinenhauptteil (12; 36; 50), an dem die erste Werkzeugkomponente (14) befestigt ist und mittels dem das erste Werkzeug (20) um eine Mehrzahl von Achsen (X-, Y-, Z-, A-, B- und C-Achse) bewegbar ist; und
- einer Steuereinrichtung (30) zur Führung des ersten Werkzeuges (20) entlang einer Bahnkurve durch Steuerung der Bewegung entlang oder um die Mehrzahl von Achsen (X-, Y-, Z-, A-, B- und C-Achse);
**dadurch gekennzeichnet, daß**
- das Werkzeugmaschinenführungssystem oder der Mehrachsenroboter zusätzlich wenigstens eine zweite Werkzeugkomponente (16) umfasst, die ein zweites Werkzeughalteteil (26) und ein daran befestigtes zweites Werkzeug (28) umfasst; und
- das Werkzeugmaschinenführungssystem oder der Mehrachsenroboter darüber hinaus eine Einrichtung (34) zum Ausblenden der Steuerung der Achse (C-Achse) der ersten Werkzeugkomponente (14) umfasst, wenn eine der zweiten Werkzeugkomponenten (16) an dem Maschinenhauptteil (12) montiert ist.

2. Vorrichtung nach Anspruch 1, **dadurch gekennzeichnet, daß** die Werkzeugkomponenten (14, 16) drehbar (B-Achse) an dem Maschinenhauptteil (12) befestigt sind.

3. Vorrichtung nach Anspruch 1 oder 2, **dadurch gekennzeichnet, daß** die elektrische Verbindung zwischen jeweiliger Werkzeugkomponente (14, 16) und Maschinenhauptteil (12, 36) mittels einer Steckereinrichtung (29) erfolgt.

4. Vorrichtung nach einem der vorhergehenden Ansprüche, **dadurch gekennzeichnet**, das die erste Werkzeugkomponente eine Ultraschallkomponente (14) ist.

5. Vorrichtung nach einem der vorhergehenden Ansprüche, **dadurch gekennzeichnet, daß** die zweite Werkzeugkomponente eine Fräserkomponente (16) ist.

6. Vorrichtung nach einem der vorhergehenden Ansprüche, **dadurch gekennzeichnet, daß** das von dem Werkzeughalteteil (18; 26) abgewandte Ende (32) des jeweiligen Werkzeuges (20; 28) in einer Grundstellung sich in einer identischen Raumposition befindet.

7. Vorrichtung nach einem der vorhergehenden Ansprüche, **dadurch gekennzeichnet, daß** eine Mehrzahl von Arbeitstischen (10, 11) vorgesehen sind.

8. Werkzeugmaschinenführungssystem oder Mehrachsenroboter mit:
- wenigstens einem Werkzeug (65) ;
- einer Werkzeugwechseleinrichtung (64), mit der das wenigstens eine Werkzeug (65) lösbar verbindbar und mittels der das Werkzeug (65) um eine Achse (Achse 6) drehbar ist;
- einem Maschinenhauptteil (62), an dem die Werkzeugwechseleinrichtung (64) montiert ist und mittels dem das Werkzeug (65) um eine Mehrzahl von Achsen (Achse 1 bis 5) bewegbar ist; und
- einer Steuereinrichtung zur Führung des jeweiligen Werkzeuges (65) entlang einer Bahnkurve durch Steuerung der Bewegung entlang oder um die Mehrzahl von Achsen (Achsen 1 bis 6);
**dadurch gekennzeichnet, daß**
- das Werkzeugmaschinenführungssystem oder der Mehrachsenroboter ferner eine Einrichtung zum Sperren der Achse der Werkzeugwechseleinrichtung (Achse 6) und zum Ausblenden der Steuerung der Achse (Achse 6) der Werkzeugwechseleinrichtung in Abhängigkeit von dem jeweiligen Werkzeug (65) aufweist, das an der Werkzeugwechseleinrichtung (64) befestigt ist.

9. Vorrichtung nach Anspruch 8, **dadurch gekennzeichnet, daß** die Werkzeugwechseleinrichtung (64) drehbar (Achse 4) an dem Maschinenhauptteil (62) befestigt ist.

10. Vorrichtung nach Anspruch 8 oder 9, **dadurch gekennzeichnet, daß** die elektrische Verbindung zwischen jeweiligem Werkzeug (65) und der Werkzeugwechseleinrichtung (64) mittels einer Steckerverbindung erfolgt.

11. Vorrichtung nach einem der vorhergehenden Ansprüche 8 bis 10, **dadurch gekennzeichnet, daß** das von der Werkzeugwechseleinrichtung (64) abgewandte Ende (32) des jeweiligen Werkzeuges (65) in einer Grundstellung sich in einer identischen Raumposition befindet.

12. Vorrichtung nach einem der vorhergehenden Ansprüche 8 bis 11, **dadurch gekennzeichnet, daß** eine Mehrzahl von Arbeitstischen vorgesehen sind.

## Revendications

1. Système de guidage pour machine-outil ou robot multiaxial pour une pluralité d'outils muni d'au moins une première composante d'outil (14) qui comprend une première partie porte-outil (18), un premier outil (20), qui est logé dans la partie porte-outil (18) de manière à pivoter (axe C), et un moteur d'orientation (22), d'une pièce mécanique principale (12, 36, 50) à laquelle la première composante d'outil (14) est fixée et au moyen de laquelle le premier outil (20) est déplaçable autour d'une multitude d'axes (axes X, Y, Z, A, B et C) et d'un dispositif de commande (30) pour le guidage du premier outil (20) le long d'une trajectoire par la commande du mouvement le long ou autour de la multitude d'axes (axes X, Y, Z, A, B et C), **caractérisé en ce que** le système de guidage pour machine-outil ou robot multiaxial comprend en outre au moins une deuxième composante d'outil (16) qui comporte une deuxième partie porte-outil (26) et un deuxième outil (28) fixé à cette dernière et **en ce que** le système de guidage pour machine-outil ou robot multiaxial comprend en outre un dispositif (34) de désactivation de la commande de l'axe (axe C) de la première composante d'outil (14) lorsque l'une des secondes composantes d'outil (16) est montée sur la pièce mécanique principale (12).

2. Dispositif selon la revendication 1, **caractérisé en ce que** les composantes d'outil (14, 16) sont fixées à la pièce mécanique principale (12) de manière à pivoter (axe B).

3. Dispositif selon la revendication 1 ou 2, **caractérisé en ce que** la connexion électrique entre chaque composante d'outil (14, 16) et pièce mécanique principale (12, 36) se fait au moyen d'un dispositif à fiches (29).

4. Dispositif selon l'une des revendications précédentes, **caractérisé en ce que** la première composante d'outil est une composante à rayons ultrasons (14).

5. Dispositif selon l'une des revendications précédentes, **caractérisé en ce que** la deuxième composante d'outil est une composante à fraise (16).

6. Dispositif selon l'une des revendications précédentes, **caractérisé en ce que** l'extrémité (32) de l'outil respectif (20, 28) opposée à la partie porte-outil (18, 26) se trouve, à l'état initial, dans une position spatiale identique.

7. Dispositif selon l'une des revendications précédentes, **caractérisé en ce que** plusieurs tables de travail (10, 11) sont prévues.

8. Système de guidage pour machine-outil ou robot multiaxial pour une pluralité d'outils muni au moins d'un outil (65), d'un changeur d'outil (64) auquel on peut rattacher l'outil (65) de manière amovible et au moyen duquel il est possible de faire pivoter l'outil (65) autour d'un axe (axe 6), d'une pièce mécanique principale (62) à laquelle le changeur d'outil (64) est monté et au moyen de laquelle l'outil (65) est déplaçable autour d'une multitude d'axes (axes 1 à 5) et d'un dispositif de commande pour le guidage de l'outil respectif (65) le long d'une trajectoire par la commande du mouvement le long ou autour d'une multitude d'axes (axes 1 à 6), **caractérisé en ce que** le système de guidage pour machine-outil ou robot multiaxial comprend en outre un dispositif de blocage de l'axe du changeur d'outil (axe 6) et de désactivation de la commande de l'axe (axe 6) du changeur d'outil en fonction de l'outil respectif (65) qui est fixé au changeur d'outil (64).

9. Dispositif selon la revendication 8, **caractérisé en ce que** le changeur d'outil (64) est fixé à la pièce mécanique principale (62) de manière à pivoter (axe 4).

10. Dispositif selon la revendication 8 ou 9, **caractérisé en ce que** la connexion électrique entre l'outil respectif (65) et le changeur d'outil (64) se fait au moyen d'un raccordement à fiches.

11. Dispositif selon l'une des revendications 8 à 10, **caractérisé en ce que** l'extrémité (32) de l'outil respectif (65) opposée au changeur d'outil (65) se trouve, à l'état initial, dans une position spatiale identique.

12. Dispositif selon l'une des revendications 8 à 11, **caractérisé en ce que** plusieurs tables de travail sont prévues.

## Claims

1. A machine tool guiding system or multi-axis robot for a plurality of tools, comprising
- at least one first tool component (14) that includes a first tool holding part (18), a first tool (20) which is rotatably (axis C) arranged on the tool holding part (18), and a rotary drive (22);
- a machine main part (12; 36; 50) to which the first tool component (14) is fastened and by means of which the first tool (20) is movable about a plurality of axes (X, Y, Z, A, B and C axis); and
- a control device (30) for guiding the first tool (20) along a path curve by controlling the movement along or about the plurality of axes (X, Y, Z, A, B and C axis);
**characterised in that**
- the machine tool guiding system or multi-axis robot additionally includes at least one second tool component (16) that includes a second tool holding part (26) and a second tool (28) fastened to the latter; and
- the machine tool guiding system or multi-axis robot furthermore includes means (34) for commenting out the control of the axis (C axis) of the first tool component (14) if one of the second tool components (16) is mounted on the machine main part (12).

2. An apparatus according to claim 1, **characterised in that** the tool components (14, 16) are rotatably (B axis) fastened to the machine main part (12).

3. An apparatus according to claim 1 or 2, **characterised in that** the electrical connection between the respective tool component (14, 16) and the machine main part (12, 36) is effected by means of a plug device (29).

4. An apparatus according to any one of the preceding claims, **characterised in that** the first tool component is an ultrasound component (14).

5. An apparatus according to any one of the preceding claims, **characterised in that** the second tool component is a milling component (16).

6. An apparatus according to any one of the preceding claims, **characterised in that** the end (32) of the respective tool (20; 28) remote from the tool holding part (18; 26) is situated, in a starting position, in an identical position in space.

7. An apparatus according to any one of the preceding claims, **characterised in that** a plurality of work benches (10, 11) is provided.

8. A machine tool guiding system or multi-axis robot comprising:
- at least one tool (65);
- a tool changing device (64) to which the at least one tool (65) is detachably connectable and by means of which the tool (65) is rotatable about an axis (axis 6);
- a machine main part (62) on which the tool changing device (64) is mounted and by means of which the tool (65) is movable about a plurality of axes (axis 1 to 5); and
- a control device for guiding the respective tool (65) along a path curve by controlling the movement along or about the plurality of axes (axes 1 to 6);
**characterised in that**
- the machine tool guiding system or multi-axis robot further comprises means for blocking the axis of the tool changing device (axis 6) and for commenting out the control of the axis (axis 6) of the tool changing device in dependence upor the particular tool (65) fastened to the tool changing device (64).

9. An apparatus according to claim 8, **characterised in that** the tool changing device (64) is rotatably (axis 4) fastened tc the machine main part (62).

10. An apparatus according to claim 8 or 9, **characterised in that** the electrical connection between the respective tool (65) and the tool changing device (64) is effected by means of a plug-type connection.

11. An apparatus according to any one of the preceding claims 8 to 10, **characterised in that** the end (32) of the respective tool (65) remote from the tool changing device (64) is situated, in a starting position, in an identical position in space.

12. An apparatus according to any one of the preceding claims 8 to 11, **characterised in that** a plurality of work benches is provided.
